# DEMANDE DE BREVET EUROPEEN

(11) **EP 3 945 162 A1**
(43) Date de publication de la demande: **02.02.2022**
(21) Numéro de dépôt: 21188421.8
(22) Date de dépôt: 29.07.2021
(51) Int. Cl.: E02B 5/08, E02B 8/02, B01D 29/03, B01D 29/44, B01D 29/56, B01D 33/15, B01D 33/50

(54) **OUVRAGE DE GÉNIE CIVIL ET SYSTÈME DE FILTRATION DE PRISE D'EAU**

(30) Priorité: 30.07.2020 FR 2008094
(71) Demandeur: Eugene B, 75018 Paris (FR)
(72) Inventeur: JACKSON, Philip Eugène Douglas, 75007 Paris (FR)
(74) Mandataire: Regimbeau

(57) **Abrégé**

L'invention concerne un ouvrage (10) de génie civil pour système de filtration de prise d'eau comprenant un chenal en béton dans lequel l'eau prélevée est destinée à circuler. Le chenal en béton est fermé à son extrémité avale, les parois (11, 12) du bassin ainsi défini étant adaptées pour recevoir le (ou les) panneau(x) filtrant(s) (30, 40), ledit bassin comportant en outre immédiatement en aval du ou des panneaux filtrants une zone apte à recevoir une pompe (21) pour la circulation de l'eau dans ledit bassin, ladite pompe (21) étant, lorsqu'elle est en place, disposée en aval du panneau filtrant, à proximité immédiate de la cloison avale (13) du chenal.

## Description

### Domaine technique général et art antérieur

La présente invention concerne le domaine des technologies de filtration pour prise d'eau sur des cours d'eau ou des plans d'eau. Les prises d'eau dans le milieu naturel pour alimenter des circuits de refroidissement, de dessalement, d'eau potable ou de procédé industriel, comportent invariablement des organes d'assèchement, des grilles à barreaux espacés de quelques centimètres pour arrêter les débris les plus gros, des tamis à maille millimétrique autonettoyants et des pompes de circulation destinées à envoyer l'eau vers les organes utilisateurs. L'ensemble est installé dans un ouvrage de génie civil suffisamment profond pour assurer aux filtres et aux pompes, une immersion suffisante en toutes circonstances.

Typiquement, les ouvrages de filtration classiquement utilisés pour ces applications sont des ouvrages de génie civil d'une certaine dimension, qui comportent des panneaux de filtration immergés (panneaux tels que décrits dans les demandes FR2871820 ou FR2978677 du déposant par exemple).

La surface de l'ouvrage est importante afin de créer des conditions d'écoulement de l'eau hydrauliquement satisfaisantes. Le plancher supérieur de l'ouvrage est situé au-dessus du niveau d'eau maximum même durant les phases transitoires. L'ouvrage doit pouvoir être asséché partiellement ou en totalité pour entretien de ses équipements.

L'ouvrage étant profond il est généralement immergé dans la nappe phréatique. Pour éviter qu'il flotte et se soulève sous l'effet de la poussée d'Archimède lorsqu'il est vide, l'ouvrage doit être lesté et / ou ancré ce qui augmente beaucoup son coût. De plus, sa construction nécessite un coûteux rabattement de nappe pour permettre un travail à sec.

Si pour les prises d'eau à fort débit (centrales thermiques ou nucléaires, alimentation de parcs industriels, GNL, etc.), les stations ci-dessus sont nécessaires malgré leur coût et leur délai de construction, une solution plus économique et plus rapide à construire est souhaitable pour les prises d'eau dont le débit n'excède pas quelques mètres cubes par seconde (petites centrales électriques, dessalement, stations de climatisation d'ensembles urbains). Il est de plus souhaitable que les équipements ne dépassent pas ou peu du plancher pour des raisons de discrétion et d'esthétique.

On connait par ailleurs, pour des applications très différentes, de nombreux systèmes de filtration : le document CN 111 424 800 propose par exemple un système de drainage pour jardin (typiquement des jardin municipaux) ; le document CN 208 825 144 propose quant à lui un boitier de nettoyage pour eau de piscine dans le cas de piscines à structures en béton.

Ces différents systèmes sont très éloignés du domaine de l'invention et sont totalement inadaptés à la filtration pour des prises d'eau sur des cours d'eau ou des plans d'eau.

### Présentation générale de l'invention

Un but général de l'invention est de proposer une solution qui ne présentent pas les inconvénients de l'état de la technique et qui répondent à ces problématiques.

L'invention propose notamment un ouvrage de génie civil.

Selon un aspect de l'invention, l'ouvrage de génie civil proposé comporte au moins un panneau filtrant et un chenal en béton dans lequel l'eau prélevée est destinée à circuler. Ce chenal en béton est fermé à son extrémité avale, les parois du bassin ainsi défini étant adaptées pour recevoir un (ou des) panneau(x) filtrant(s) et constituer un bassin de filtration rempli d'eau dans lequel le ou les panneaux filtrants peuvent être glissés pour y être immergé(s) ou dont ils peuvent être relevés pour entretien, sans assèchement de l'ouvrage,, ledit bassin comportant en outre immédiatement en aval du ou des panneaux filtrants une zone apte à recevoir une pompe pour la circulation de l'eau dans ledit bassin, ladite pompe étant, lorsqu'elle est en place, disposée en aval du panneau filtrant, à proximité immédiate de la cloison avale du chenal.

Ainsi, l'invention propose une architecture avec laquelle il est possible de glisser et relever des panneaux filtrants dans un bassin de filtration.

De cette façon, le bassin n'a pas être asséché pour l'entretien des panneaux filtrants, ceux-ci - immergés en fonctionnement - peuvent être relevés pour entretien, sans assèchement de l'ouvrage.

Un tel ouvrage a en outre l'avantage de permettre un dimensionnement optimisé.

La pompe de circulation et le (ou les) panneau(x) filtrant(s) qu'il reçoit étant très rapprochés du fait de la conception de l'ensemble, l'ouvrage peut être très court et de ce fait très économique.

Il est en outre destiné à être exploité sans assèchement. N'étant jamais vide, il ne tend pas à flotter et n'a pas besoin de lest ou d'ancrage et ne nécessite pas ou peu de rabattement de nappe pour sa construction.

Sa construction est de ce fait simple, économique et très rapide.

L'invention propose également un système de filtration de prise d'eau pour la filtration et/ou la collecte de corps tels que des débris et particules véhiculés par l'eau prélevée au niveau de ladite prise d'eau.

Selon un autre aspect de l'invention, d'autres éléments que le (ou les) panneau(x) filtrant(s) sont adaptés pour être relevés en dehors du bassin pour leur entretien : par exemple la pompe de circulation, lorsque celle-ci est destinée à fonctionner immergée.

Comme on l'aura compris, ceci permet de ne pas avoir à assécher l'ouvrage de génie civil.

Chaque élément est en effet extractible par levage et peut ainsi être entretenu à sec sans assèchement de l'ouvrage.

A cet effet notamment, un panneau filtrant peut comporter une paroi support qui porte d'une part un tamis millimétrique et d'autre part différents composants permettant le fonctionnement de celui-ci.

La paroi support peut typiquement porter un mécanisme d'entrainement et/ou une pompe d'aspiration, ainsi qu'au moins un composant d'amenée d'énergie et/ou de raccordement à un (ou des) capteur(s).

Le panneau filtrant du tamis millimétrique peut en outre comporter des moyens de connectique adaptés au raccordement à des moyens de contrôle-commande à l'extérieur du chenal en béton.

Par ailleurs, un panneau filtrant peut également être une grille à barreaux destinée à être mise en place sur des rainures des parois du chenal, en amont du tamis millimétrique.

Par exemple, la grille à barreaux et son système de nettoyage (dégrilleur) éventuel, est installée sur une paroi métallique glissée dans des rainures pratiquées de chaque côté dans les murs latéraux du chenal, le tamis autonettoyant millimétrique est aussi fixe sur une paroi métallique glissé dans des rainures pratiquées dans les murs latéraux, juste en aval de la grille à barreaux.

Le tamis millimétrique peut être du type totalement immergé, ceci pour réduire le coût, l'impact visuel et l'encombrement.

La pompe de circulation de l'eau peut être du type verticale immergée avec moteur émergé ou immergé.

L'invention propose en outre un ensemble de filtration de prise d'eau, pour la filtration et/ou la collecte de corps tels que des débris et particules véhiculés par l'eau prélevée au niveau de ladite prise d'eau, comportant un chenal en béton qui est un ouvrage de génie civil et un système de filtration qui sont du type précités.

Elle propose également un procédé d'exploitation d'un tel ensemble de filtration, dans lequel le (ou les) panneau(x) filtrant(s) et la pompe de circulation sont assemblés avant installation, mis en place dans le bassin par grutage, puis raccordés.

Pour leur entretien, le (ou les) panneau(x) filtrant(s) et la pompe de circulation sont relevés en dehors du bassin, sans assèchement de celui-ci.

### Brève description des dessins

D'autres caractéristiques et avantages de l'invention ressortiront encore de la description qui suit, laquelle est purement illustrative et non limitative, et doit être lue en regard des figures annexées sur lesquelles :
- [Fig. 1] -: la figure 1 est une vue en coupe en section verticale d'un ouvrage conforme à un mode de réalisation possible pour l'invention, ainsi que de son système de filtration ;
- [Fig. 2] -: la figure 2 est une vue en coupe en section horizontale de l'ouvrage de la figure 1 ;
- [Fig. 3] -: la figure 3 est une vue en coupe en section transversale du même ouvrage.

### Description d'un ou plusieurs modes de réalisation

### Ouvrage de génie civil

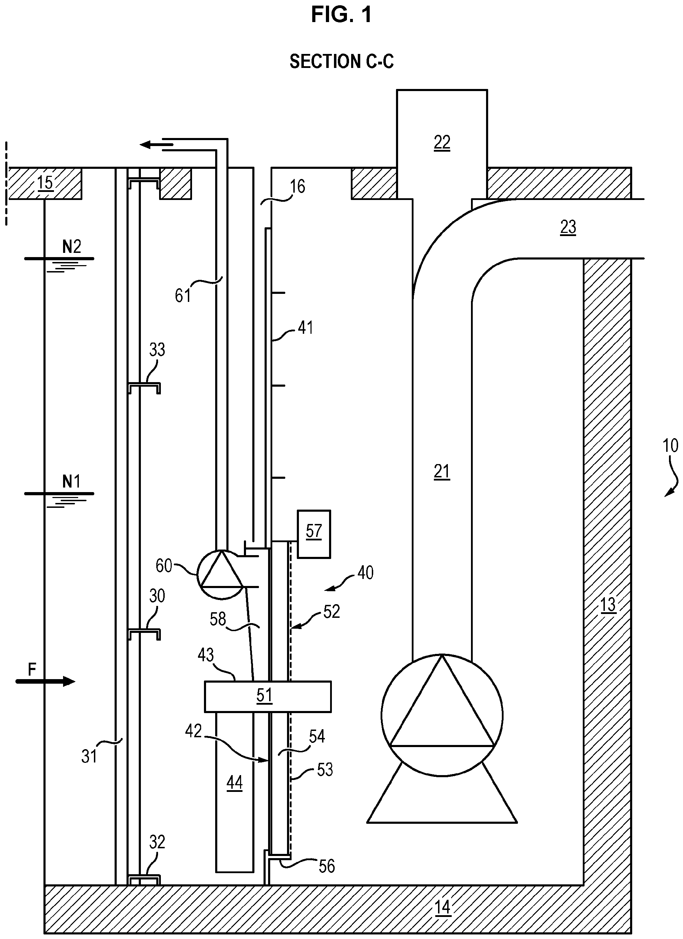

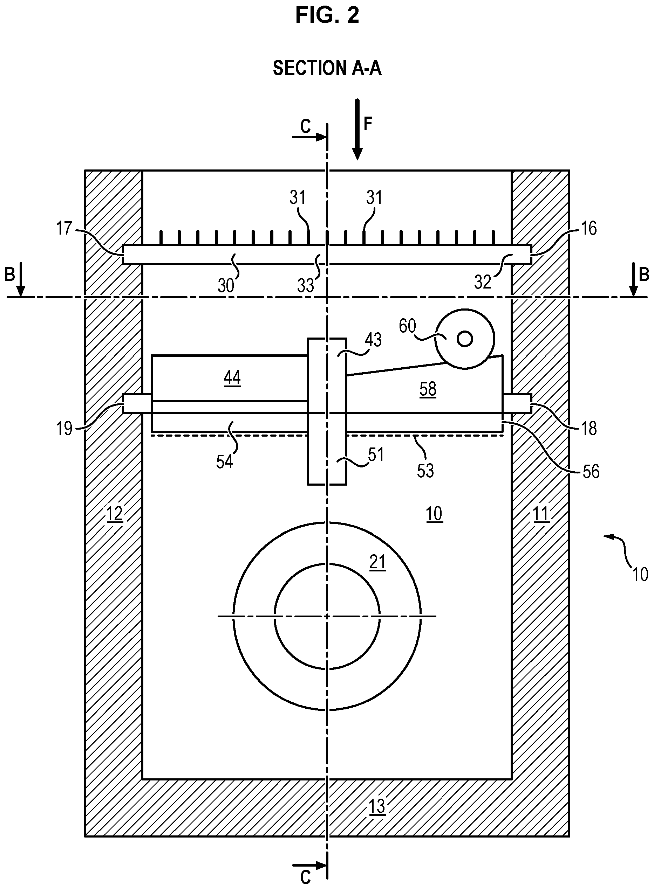

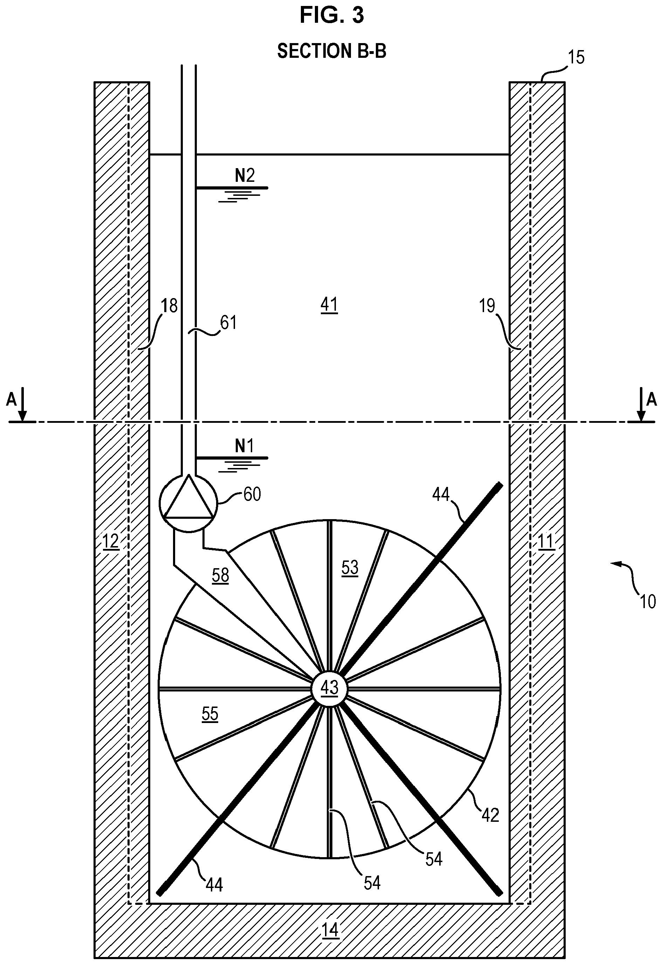

Sur les figures 1 à 3, l'ouvrage de génie civil dans lequel est installé le système de filtration est référencé par 10. Il comporte deux parois latérales 11 et 12 (figures 2 et 3) qui définissent ensemble un chenal dans lequel circule l'eau prélevée. L'écartement est au moins égal à la largeur nécessaire à l'alimentation d'une pompe 21 pour la circulation de l'eau.

L'ouvrage 10 comporte un mur de fermeture aval 13 (figures 1 et 2) et une dalle de fond 14 (figures 1 et 3).

Le côté entrée est ouvert sur le milieu (rivière, lac, etc.) d'où provient l'eau pompée.

Le niveau de la face supérieure de la dalle de fond 14 est choisi de manière à ce que la distance verticale entre ledit fond 14 et le niveau des plus basses eaux N1, diminué de la perte de charge créée par le système dans les cas les plus défavorables (0.5 à 1 mètre, par exemple), soit supérieur la hauteur d'immersion nécessaire à la pompe 21 selon les standards hydrauliques.

Le niveau supérieur - référencé 15 (figures 1 et 3) - de l'ouvrage 10 est supérieur au niveau N2 des plus hautes eaux, augmenté des surcotes transitoires. Ce niveau supérieur 15 est par exemple choisi de manière à être accessible depuis le niveau du terrain naturel.

L'ouvrage 10 est en communication avec le milieu naturel et est rempli d'eau.

Ainsi, le chenal définit (avec le fond 14 et le mur aval 13) un bassin de filtration rempli d'eau qui en fonctionnement n'a pas à être asséché.

Des rainures verticales 16, 17 et 18, 19 (figure 2) sont aménagées dans les parois 11 et 12 (figure 2). Les rainures 16 et 17 sont les plus en amont et les rainures 18 et 19 sont un peu plus en aval. Ces rainures font par exemple quelques centimètres de profondeur.

### Système de filtration

Outre la pompe 21, le système de filtration comporte un ou plusieurs panneaux filtrants, en l'occurrence une grille à barreaux 30 et un tamis millimétrique 40.

Le ou les panneaux filtrants sont verticaux. En fonctionnement, ils sont glissés dans le bassin de filtration et immergés celui-ci. Ils sont susceptibles d'être relevés et sortis du bassin pour entretien à sec. La grille à barreaux verticaux 30 est glissée dans les rainures 16 et 17 depuis le niveau supérieur. Cette grille 30 est composée de barreaux 31 régulièrement espacés de quelques centimètres (deux à six, en général), fixés sur un cadre 32 généralement muni de traverses horizontales 33.

Lorsque la pompe 21 est en fonctionnement, l'eau du milieu naturel pénètre dans l'ouvrage 10 selon la flèche F et s'écoule à travers la grille 30. Les débris de dimension supérieure à l'écartement des barreaux sont arrêtés sur la face amont de ladite grille 30.

Le tamis millimétrique 40 est un système de tamisage à maille millimétrique autonettoyant (de 10x10 mm à 2x2 mm généralement). Il est glissé depuis le niveau supérieur dans les rainures 18 et 19. Ce tamis 40 peut avantageusement être du type décrit dans le brevet français FR2871820. Le panneau qui définit ledit tamis comporte une paroi métallique transversale 41 (figures 1 et 3). Cette paroi 41 comporte une ouverture circulaire 42 au centre de laquelle est fixé, par des bras radiaux 44 solidaires de la paroi métallique 41, un moyeu 43 fixe portant un arbre (non figuré) sur lequel tourne le moyeu 51 de la roue 52.

La roue 52 comporte sur sa face avale un élément filtrant à maille millimétrique 53 qui peut être en grillage soudé, tissé ou en tôle perforée, etc. La roue 52 comporte un nombre de rayons 54 qui constituent des compartiments 55 (figure 3) dont le fond est un secteur de l'élément filtrant 53 et les côtés sont les rayons 54 et un tronçon de jante 56.

L'eau traverse la roue 52 et les éléments de dimension supérieure à celle de la maille sont arrêtés sur la surface amont de l'élément filtrant 53. Les débris ainsi arrêtés sont stockés dans les compartiments 55.

La roue 52 est entraînée en rotation par un mécanisme d'entrainement 57, connu en soi. Les compartiments passent tour à tour devant une trompe 58 tangente à la face amont des rayons. Cette trompe 58 est connecté à une pompe 60. Cette pompe 60 aspire l'eau dans le compartiment 55, nettoyant la portion d'élément filtrant 53 et entraînant les débris via une tuyauterie 61 vers le point de collecte et/ou de rejet.

Il est à noter que le système de tamisage 40 a tous ses composants, y compris la tuyauterie 61, fixés sur la paroi métallique 41, y compris l'amenée d'énergie aux moteurs du mécanisme 57 et de la pompe 60, ainsi que le raccordement des capteurs éventuels (perte de charge, etc.).

L'ensemble 40 peut ainsi être connecté au contrôle-commande au niveau supérieur après avoir été descendu dans les glissières 18 et 19.

Le filtre 40 est généralement piloté par la perte de charge qu'il engendre.

La pompe 21, entrainée par un moteur 22, est installée dans une zone du chenal à l'aval immédiat du panneau filtrant 40, à proximité de celui-ci. On notera que l'écoulement sortant du panneau filtrant 40 est tranquillisé par celui-ci et exempt de turbulences nuisibles à la pompe 21 du fait de la faible obstruction au flot crée par ce panneau filtrant 40 de grand diamètre.

La pompe 21 est préférablement du type vertical refoulant par une conduite 23 l'eau tamisée vers son utilisation. Le moteur 22 peut être soit installé hors d'eau comme représenté sur la figure 1, soit immergé pour ne pas dépasser du plancher supérieur 15 de l'ouvrage.

La pompe 21, le moteur 22 et la conduite 23 sont le plus souvent préassemblés (ensemble 20) avant mise en place dans l'ouvrage 10.

Si la quantité de débris arrêtés par la grille à barreaux 30 peut être importante, un système de nettoyage par peigne à translation verticale, connu en soi, peut être assujetti à la grille 30 et extractible avec cette dernière.

### Exploitation et avantages

Les panneaux filtrants 30 et 40 et l'ensemble 20 sont assemblés avant installation.

Ils sont mis en place par grutage au niveau du plancher supérieur, sur le bassin que constitue l'ouvrage 10, les panneaux 30 et 40 étant simplement glissés dans des rainures béton.

Les raccordements se font après mise en place dans l'ouvrage 10. Le montage est donc très simple et très rapide.

L'ensemble de filtration ainsi constitué par l'ouvrage 10, les panneaux 30 et 40 et l'ensemble 20 de la pompe 21 de circulation d'eau, est alors opérationnel.

Les panneaux 30 et 40 et l'ensemble 20 peuvent en outre être relevés par grue pour entretien, sans assèchement de l'ouvrage.

Les éléments 20, 30 et 40 étant très rapprochés du fait de leur conception, l'ouvrage 10 peut être très court et de ce fait très économique.

La grille 30 ne dépasse pas du plancher supérieur 15, le panneau filtrant 40 non plus. La pompe 20, pour autant qu'elle soit du type à moteur immergé, ne dépasse pas non plus le plancher supérieur 15. L'ensemble de la station de pompage peut ainsi être invisible, ou sinon, très discrète. Les systèmes de contrôle-commande peuvent être déportés pour plus de discrétion.

Pour autant que la pompe de nettoyage 60 soit du type qui ne crée pas de dommages aux poissons, le système de tamisage ainsi constitué retournera les dits poissons intacts à leur milieu naturel.

### Variantes

De nombreuses autres variantes de réalisation sont envisageables. Notamment, le filtre millimétrique 40 peut tout aussi bien être du type objet du brevet FR2978677 ou un filtre à chaîne connu en soi.

## Revendications

1. Ouvrage (10) de génie civil pour système de filtration de prise d'eau sur des cours d'eau ou des plans d'eau du type comportant au moins un panneau filtrant (30, 40), ledit ouvrage (10) comprenant un chenal en béton dans lequel l'eau prélevée est destinée à circuler, **caractérisé en ce que** le chenal en béton est fermé à son extrémité avale, les parois (11, 12) du bassin ainsi défini étant adaptées pour recevoir le (ou les) panneau(x) filtrant(s) (30, 40) et constituer un bassin de filtration rempli d'eau dans lequel le ou les panneaux filtrants peuvent être glissés ou dont ils peuvent être relevés pour entretien, sans assèchement de l'ouvrage, ledit bassin comportant en outre immédiatement en aval du ou des panneaux filtrants (30, 40) une zone apte à recevoir une pompe (21) pour la circulation de l'eau dans ledit bassin, ladite pompe étant, lorsqu'elle est en place, disposée en aval du (ou des) panneau(x) filtrant(s), à proximité immédiate de la cloison avale (13) du chenal.

2. Ouvrage (10) de génie civil pour système de filtration de prise d'eau selon la revendication 1, **caractérisé en ce que** les parois (12,13) du chenal en béton comporte des rainures (16, 17 ; 18, 19) adaptées pour recevoir le (ou les) panneau(x) filtrant(s) (30, 40) ou permettre de les relever pour entretien.

3. Système de filtration de prise d'eau sur des cours d'eau ou des plans d'eau pour la filtration et/ou la collecte de corps tels que des débris et particules véhiculés par l'eau prélevée au niveau de ladite prise d'eau, comportant au moins un panneau filtrant (30,40) et une pompe (21) pour la circulation de l'eau dans un chenal en béton, **caractérisé en ce que,**
le chenal en béton étant fermé à son extrémité avale et est adapté pour recevoir le ou les panneaux filtrant(s) (30,40) et la pompe (21) de circulation d'eau, ladite pompe (21) étant alors disposée en aval du panneau filtrant, à proximité immédiate de la cloison avale du chenal,
le chenal définissant ainsi un bassin de filtration rempli d'eau dans lequel le ou les panneaux de filtrants sont glissés,
le ou les panneau(x) filtrant(s) (30,40) et la pompe de circulation (21) sont adaptés pour être relevés en dehors du bassin, pour entretien sans assèchement de celui-ci.

4. Système selon la revendication 3, **caractérisé en ce qu'**un panneau filtrant comporte une paroi support (41) qui porte d'une part un tamis millimétrique (40) et d'autre part différents composants (57, 60, 61) permettant le fonctionnement de celui-ci.

5. Système selon la revendication 3, **caractérisé en ce que** la paroi support porte un mécanisme d'entrainement (57) et/ou une pompe d'aspiration (60), ainsi qu'au moins un composant d'amenée d'énergie et/ou de raccordement à un (ou des) capteur(s).

6. Système selon la revendication 4, **caractérisé en ce que** le panneau filtrant du tamis millimétrique comporte des moyens de connectique adaptés au raccordement à des moyens de contrôle-commande à l'extérieur du chenal en béton.

7. Système selon l'une des revendications 3 à 5, **caractérisé en ce qu'**un panneau filtrant est une grille à barreaux destinée à être mise en place sur des rainures des parois du chenal, en amont du tamis millimétrique.

8. Système selon l'une des revendications 3 à 6, **caractérisé en ce que** le tamis millimétrique est du type totalement immergé.

9. Système selon l'une des revendications 3 à 7, **caractérisé en ce que** la pompe (21) de circulation de l'eau est du type vertical immergé avec moteur émergé ou immergé.

10. Ensemble de filtration de prise d'eau sur des cours d'eau ou des plans d'eau, pour la filtration et/ou la collecte de corps tels que des débris et particules véhiculés par l'eau prélevée au niveau de ladite prise d'eau, comportant un chenal en béton, ainsi qu'au moins un système de filtration panneau filtrant et une pompe pour la circulation de l'eau dans ledit chenal, **caractérisé en ce que** le chenal en béton est un ouvrage (10) de génie civil selon l'une des revendications 1 ou 2, le système de filtration étant un système(10) selon l'une des revendications 3 à 9.

11. Procédé d'exploitation d'un ensemble de filtration selon la revendication 10, **caractérisé en ce que** le (ou les) panneau(x) filtrant(s) (30, 40) et la pompe de circulation (21) sont assemblés avant installation, mis en place dans le bassin par grutage, puis raccordés.

12. Procédé selon la revendication 11, **caractérisé en ce que** le (ou les) panneau(x) filtrant(s) (30, 40) et/ou la pompe de circulation est (sont) relevés en dehors du bassin, pour entretien sans asséchement de celui-ci.
